# FASCICULE DE BREVET EUROPEEN

(11) **EP 0 502 801 B1**
(45) Date de publication et mention de la délivrance du brevet: **09.11.1994**
(21) Numéro de dépôt: 92440031.0
(22) Date de dépôt: 27.02.1992
(51) Int. Cl.: A21C 5/00

(54) **Procédé de mise en forme adéquate de pièces de pâte pour la fabrication de pains longs et un dispositif permettant l'application de ce procédé**
Verfahren zur Formung von Teigstücken zur Herstellung von langen Broten und Vorrichtung zur Anwendung dieses Verfahrens
Method of forming dough pieces for the production of long leaves and device for the application of this method

(30) Priorité: 07.03.1991 FR 9102934
(43) Date de publication de la demande: 09.09.1992
(73) Titulaire: Voegtlin, René, F-67200 Oberhausbergen (FR)
(72) Inventeur: Voegtlin, René, F-67200 Oberhausbergen (FR)
(74) Mandataire: Aubertin, François

(56) Documents cités:
- FR-A- 2 401 614
- US-A- 2 576 670

## Description

L'invention concerne, d'une part, un procédé de mise en forme adéquate de pièces de pâte précédant leur introduction dans un laminoir d'une façonneuse destinée à la fabrication de pains longs et, d'autre part, un dispositif permettant l'application de ce procédé.

La présente invention trouvera son application dans le domaine des machines destinées à la production industrielle des produits de boulangerie et viennoiseries.

Une telle machine est présentée dans FR-A-2 401 614.

Actuellement, après la réalisation de la pâte, celle-ci est versée dans l'entonnoir d'une diviseuse volumétrique. Cette diviseuse volumétrique comporte, en général, un piston doseur à section carrée, rectangulaire ou ronde dont la course est réglable en fonction du poids désiré conféré aux pièces de pâte divisée.

Pour un réglage donné, les pièces de pâte qui se suivent ont un poids identique dans la mesure où un volume ainsi défini contient une quantité de pâte à densité constante et comprimée sous une pression constante. Il s'avère que les pièces de pâte ainsi débitées comportent un poids assez constant mais elles ont l'inconvénient d'être de formes diverses selon le genre de diviseuses volumétriques utilisées ayant des pistons doseurs de formes diverses.

De ce fait, les pièces de pâte débitées par la diviseuse volumétrique sont dirigées vers une bouleuse conférant à chaque pièce de pâte une forme approximative de boule en vue d'introduire des pièces de forme régulière dans une façonneuse pour la fabrication de pains longs.

Cependant, en raison de la division, d'une part, et du boulage, d'autre part, on soumet chaque pièce de pâte à des contraintes et il s'avère nécessaire d'intercaler entre la bouleuse et la façonneuse une chambre de repos. En effet, il faut laisser se reposer les pièces de pâte après les avoir serrées par les opérations de division et de boulage pour qu'elles soient à même de se prêter à l'opération de façonnage. A cet effet, les pièces de pâte boulées séjournent un certain laps de temps dans la chambre de repos. Le temps de repos doit être suffisamment long, ce qui nécessite des chambres de repos conséquentes qui doivent pouvoir contenir un grand nombre de pièces de pâte boulées. Ces dernières sont généralement contenues et transférées au travers de la chambre de repos par un système à balancelles.

Puis, les pièces de pâte boulées reposées sont déposées sur un tapis convoyeur disposé à la sortie de la chambre de repos et qui les dirige dans la façonneuse.

En général, le mécanisme d'entrée de la façonneuse est constitué par un laminoir formé de deux cylindres soumis à une rotation contraire l'une par rapport a' l'autre. Ce laminoir happe les boules de pâte déversées par le tapis convoyeur pour les transformer en galettes sensiblement rondes. Ces galettes sont évacuées par un tapis roulant situé sous le laminoir. Par suite du mouvement d'avance conféré par le tapis roulant, la tranche avant de chaque galette bute ensuite dans un tapis lourd qui, habituellement, frotte sur le tapis roulant de la façonneuse. La coopération du tapis lourd avec le tapis roulant de la façonneuse provoque d'abord le pliage de la tranche avant de la galette, puis son enroulage complet.

La pièce de pâte se présente alors sous la forme d'un longuet de pâte enroulée dont la longueur correspond sensiblement au diamètre qu'avait la galette ronde et dont la section est puis forte au milieu qu'à ses deux extrémités.

Le tapis roulant de la façonneuse fait ensuite rouler ce longuet de pâte enroulée contre une planche de façonnage. Cette dernière opération de façonnage sert à l'allongement du longuet et sert à aplanir sa grosseur centrale pour obtenir un pâton long aussi cylindrique que possible pour obtenir, après sa fermentation finale, puis sa cuisson, un pain long uniformément cuit sur toute sa longueur.

Il s'est avéré que, pour obtenir l'égalisation et la longueur généralement nécessaires, il faut exercer une pression très forte sur le longuet de pâte enroulée circulant entre la planche de façonnage et le tapis roulant de la façonneuse.

Toutefois, ce procédé connu présente plusieurs inconvénients.

L'inconvénient majeur réside dans le travail très dur que doit fournir la façonneuse qui doit transformer les pièces en forme de boule en provenance de la bouleuse en pâtons cylindriques longs. En effet, le laminage d'une boule conduisant à l'obtention d'une galette ronde donne un longuet enroulé avec une surépaisseur au milieu par rapport à ses extrémités, ce qui rend le travail d'aplanissement et d'allongement très dur. Il en résulte, fréquemment, des pâtons insuffisamment longs, insuffisamment cylindriques et de longueur irrégulière. Ces défauts sont accentués quand on utilise des farines dites "fortes" conférant à la pâte une grande résistance élastique contre un allongement.

Du fait que les pièces de pâte sortant de la diviseuse volumétrique sont de formes diverses et, inadéquates pour être façonnées en pâtons longs, il est nécessaire de prévoir une bouleuse pour régulariser la forme des pièces de pâte pour pouvoir fabriquer et obtenir des pains longs de forme également régulière.

Un autre inconvénient réside dans le fait qu'il faut ensuite intercaler entre la bouleuse et la façonneuse une chambre de repos très importante pour effacer les effets du boulage en vue du façonnage.

Non seulement la nécessité de la présence d'une bouleuse et d'une chambre de repos importante augmente le coût de la ligne de fabrication des pains longs mais il faut également pouvoir disposer de places suffisantes pour l'implantation de la bouleuse et d'une grande chambre de repos.

La présente invention a pour but de remédier à ces inconvénients. L'invention telle qu'elle est caractérisée dans les revendications résout ce problème et consiste, tout d'abord, en un procédé de mise en forme adéquate de pièces de pâte précédant leur introduction dans un laminoir d'une façonneuse destinée à la fabrication de pains longs et située en aval d'un ensemble comprenant une diviseuse volumétrique, procédé consistant à conférer aux pièces de pâte une forme oblongue dont l'axe longitudinal est perpendiculaire à l'axe d'avancement et présentant à chacune de ses extrémités une surépaisseur par rapport à l'épaisseur de sa partie centrale et qu'ensuite, on transforme ces pièces de pâte, de forme oblongue, en des galettes rectangulaires dont les côtés sont sensiblement droits.

Selon une autre caractéristique de ce procédé, la mise en forme oblongue à extrémité grossie des pièces de pâte est opérée entre un entonnoir d'alimentation en pâte surmontant la diviseuse volumétrique et le laminoir de la façonneuse et que la mise en forme de galettes rectangulaires est effectuée lors du passage des pièces de pâte de forme adéquate dans ledit laminoir.

Préférentiellement, selon ce procédé, l'on réalise la mise en forme oblongue à extrémité grossie des pièces de pâte en même temps que le dosage du volume des pièces de pâte dans la diviseuse volumétrique.

L'invention résout, également, le problème lié aux inconvénients rencontrés dans le cadre de l'état de la technique, au travers d'un dispositif permettant l'application du procédé ci-dessus et comprenant une diviseuse volumétrique surmontée d'un entonnoir d'alimentation en pâte et se situant en amont d'un laminoir d'une façonneuse, la diviseuse volumétrique comportant, tout particulièrement, un piston doseur présentant, d'une part, un corps de forme plate dont la section transversale est de grande largeur par rapport à son épaisseur et, d'autre part, des moyens conférant aux extrémités de la forme oblongue de la pièce de pâte une surépaisseur, ce piston doseur coulissant dans une chemise de section correspondante.

Les avantages obtenus grâce à cette invention consistent en ce qu'au travers du piston doseur, on réalise mécaniquement, les pièces de pâte de forme oblongue dont chaque extrémité présente une surépaisseur. L'éjection, par le piston doseur de ces pièces de pâte ayant cette forme, permet d'obtenir régulièrement des pièces de pâte identiques et de forme directement adéquate pour le façonnage en pâtons longs. Ces pièces sont déposées perpendiculairement à l'axe d'avancement sur un tapis transporteur par l'éjection du piston doseur et ne passent plus bar une bouleuse.

Le tapis transporteur les achemine directement dans une petite chambre de repos ayant une contenance deux à trois fois plus petite que la contenance des chambres de repos utilisées dans le procédé connu, du fait que les pièces n'ont plus qu'à se détendre consécutivement à la compression de la diviseuse et qu'elles n'ont plus à se détendre du boulage qui est supprimé.

A la sortie de la petite chambre de repos, ces pièces de pâte de forme oblongue dont les extrémités présentent une surépaisseur sont déposées perpendiculairement à l'axe d'avancement d'un tapis transporteur acheminant lesdites pièces de pâte vers la façonneuse. Cette disposition facilite l'introduction des pièces de pâte dans le laminoir placé en tête de la façonneuse.

La pièce de pâte de forme oblongue est, en effet, facilement happée sur toute sa longueur par le laminoir étant donné qu'elle se présente parallèlement à la fente dudit laminoir contrairement au procédé connu selon lequel la pièce de pâte en forme de boule est plus difficilement happée en un point périphérique par cette fente du laminoir.

Selon l'invention, la pièce de pâte de forme oblongue à extrémités grossies est transformée par le laminoir de la façonneuse en une galette ayant une forme sensiblement rectangulaire et qui est déposée sur le tapis roulant de la façonneuse, le grand côté du rectangle étant perpendiculaire à l'axe d'avancement du tapis transporteur.

Pour l'obtention de cette forme sensiblement rectangulaire, la surépaisseur conférée aux extrémités de la pièce de pâte de forme oblongue est d'une importance primordiale. En effet, il s'avère qu'une pièce de pâte simplement longue présentée parallèlement à la fente du laminoir se fait happer préférentiellement par ses deux extrémités qui pénètrent plus facilement dans ladite fente que sa partie centrale, surtout après un temps de repos, même de courte durée, pendant lequel les extrémités de la pièce de pâte longue ont toujours tendance à couler un peu en s'effilant. Une telle inégalité de happage confère à la galette une forme de croissant de lune dont les pointes sont dirigées vers le tapis lourd.

Par contre, pour les pièces de pâte de forme oblongue dont les deux extrémités présentent une surépaisseur, la pénétration de la pièce de pâte dans la fente du laminoir se trouve égalisée sur l'ensemble de la longueur de la pièce, puisque la pénétration des extrémités est ralentie par rapport à la partie centrale de la pièce de pâte. Cette disposition permet d'obtenir une galette rectangulaire dont les côtés sont sensiblement droits et dont le grand côté, du fait que les extrémités soient comprimées et étirées vers l'extérieur, est substantiellement plus long que n'était la pièce de pâte avant le laminage, ce qui va dans le sens de l'obtention de pains longs.

Après le laminage, le grand côté avant de la galette rectangulaire, véhiculée par le tapis roulant de la façonneuse, vient buter contre le tapis lourd, ce qui a pour effet de plier d'abord le grand côté avant de la galette rectangulaire, puis d'enrouler cette dernière sur elle-même. Ainsi, on réalise un longuet de pâte enroulée dont la longueur correspond sensiblement au grand côté de la galette rectangulaire.

Le longuet de pâte enroulée ainsi obtenu est pratiquement cylindrique, sans comporter de partie centrale plus épaisse que ses extrémités, comme cela est le cas dans le cadre du procédé connu selon lequel le longuet de pâte enroulée est réalisé à partir d'une galette ronde.

Le longuet de pâte enroulée, cylindrique et déjà relativement long, se prête facilement à la dernière opération de façonnage consistant à rouler ledit longuet contre la planche de façonnage par l'action du tapis roulant en mouvement de la façonneuse pour conférer au pâton sa longueur.

Cette dernière opération ne nécessite plus de pression très forte à exercer sur le longuet, étant donné que la partie centrale ne comporte plus de surépaisseur qu'il fallait aplanir selon le procédé connu où le longuet de pâte enroulée se réalisait à partir d'une galette ronde. Cela permet d'obtenir des pâtons suffisamment longs, pratiquement cylindriques et de longueur régulière, même avec des pâtes présentant une forte résistance élastique à l'allongement.

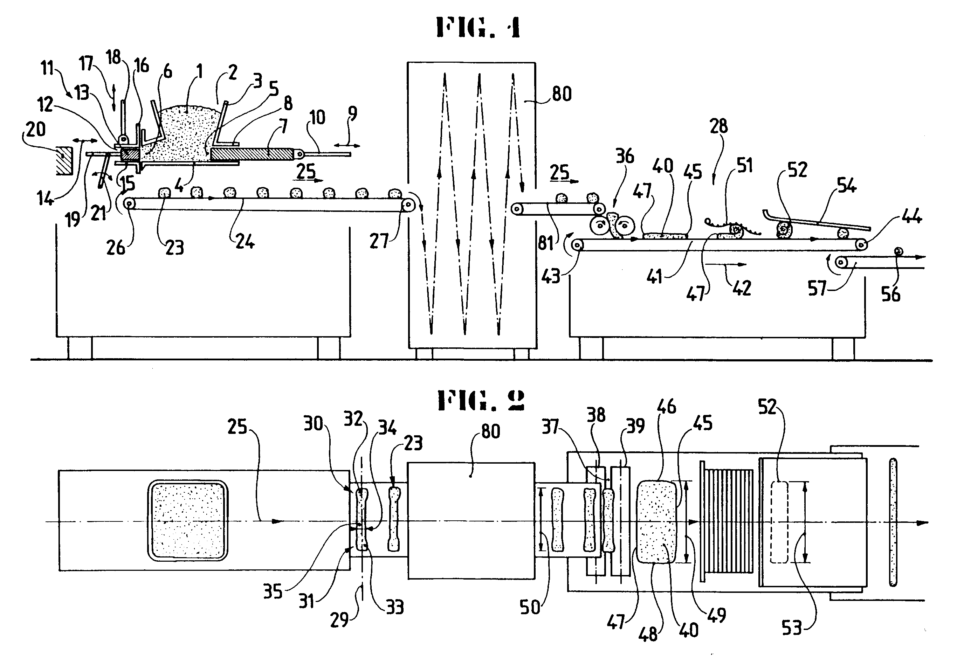

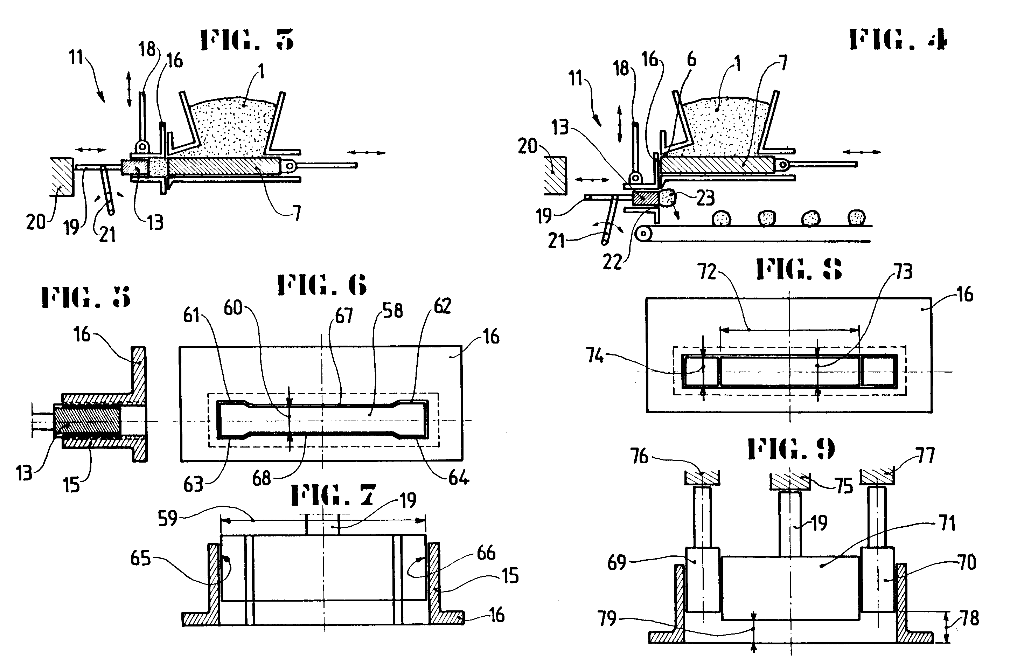

En résumé, ces avantages obtenus grâce à cette invention consistent en :
. une augmentation de la qualité du travail par la facilité d'obtention de pâtons suffisamment longs, pratiquement cylindriques et de longueur régulière
. une diminution de coût et d'encombrement de l'installation par la suppression de la bouleuse et par la diminution de la capacité de la chambre de repos
L'invention est décrite, ci-après plus en détail à l'aide de dessins représentant un exemple d'un mode de réalisation.
. la figure 1 représente une vue schématique en élévation et en coupe du dispositif permettant, conformément a l'invention, de mettre en forme des pièces de pâte avant leur introduction dans la façonneuse
. la figure 2 représente une vue en plan du dispositif conforme à la figure 1
. la figure 3 représente une vue en élévation et en coupe de la diviseuse volumétrique seule dans une seconde position de son cycle de fonctionnement.
. la figure 4 représente une vue en élévation et en coupe de la diviseuse volumétrique seule dans une troisième position de son cycle de fonctionnement.
. les figures 5 à 7 représentent le piston doseur selon un premier mode de réalisation et plus particulièrement
. *la figure 5 illustre une vue en élévation et en coupe du piston doseur*
. *la figure 6 est une vue de droite du piston doseur*
. *la figure 7 représente une vue en plan et en coupe du piston doseur*
. les figures 8 et 9 représentent le piston doseur selon un second mode de réalisation et plus particulièrement
. *la figure 8 est une vue de droite du piston doseur*
. *la figure 9 est une vue en plan et en coupe de ce piston doseur.*

On se réfère aux figures 1 et 2.

Après sa réalisation, la pâte 1 est versée dans l'entonnoir 2 d'une diviseuse volumétrique 3. Cet entonnoir 2 comporte, à sa partie inférieure 4, deux ouvertures 5, 6 se faisant face. L'ouverture 5 sert de passage à un piston de manoeuvre 7 coulissant dans une chemise 8 solidaire de l'entonnoir 2 et soumis à un mouvement de va-et-vient horizontal 9 à l'aide d'une bielle 10 actionnée par un moyen moteur approprié (non représenté). La seconde ouverture 6 sert de passage de sortie à une certaine quantité de pâte poussée par le piston de manoeuvre 7.

Au droit de cette seconde ouverture 6 est disposé un ensemble doseur-diviseur 11 comportant une chambre de réception 12 de pâte 1 dans laquelle coulisse un piston-doseur 13 également soumis à un mouvement de va-et-vient 14 et se déplaçant dans une chemise 15 solidaire d'une plaque coulissante 16 disposée à fleur avec la chambre de réception 12. Cet ensemble doseur-diviseur 11 est soumis à un mouvement de va-et-vient vertical 17 et il est actionné par une biellette 18. Les mouvements de va-et-vient 14 du piston-doseur 13 sont régis par la tige d'un piston 19 dont le recul est arrêté par une butée réglable 20 et dont l'avance est actionnée par un levier 21.

La coordination des trois mouvements, à savoir le mouvement de va-et-vient horizontal 9 du piston de manoeuvre 7, le mouvement de va-et-vient vertical 17 de l'ensemble doseur-diviseur 11 et le mouvement de va-et-vient 14 du piston doseur 13, s 'effectue par une cinématique de liaison et par une motorisation qui peuvent être quelconques et qui ne sont pas représentées dans les figures 1 et 2.

On se réfère aux figures 1, 3 et 4 représentant le cycle de fonctionnement de la diviseuse volumétrique 3.

La figure 1 montre la diviseuse volumétrique 3 à l'instant où le piston de manoeuvre 7 est en position reculée et où la pâte 1 remplit le fond de l'entonnoir 2. A cet instant, l'ensemble doseur-diviseur 11 est en position levée et le piston doseur 13 est en position avancée, prêt à recevoir la pâte à doser et à diviser.

Depuis ces positions, le piston de manoeuvre 7 avance en poussant la pâte 1 sur le piston doseur 13, qui, sous cette pression, recule dans sa chemise 15 jusqu'à ce que la tige de piston 19 rencontre la butée réglable 20 dont la position détermine la dose de pâte (voir figure 3).

A ce moment là, l'ensemble doseur-diviseur 11 s'abaisse. La plaque coulissante 16 obture la seconde ouverture 6 de l'entonnoir 2 et l'ouverture 22 de la chambre de réception 12 est libérée. Le piston doseur 13 s'avance sous l'action du levier 21 en éjectant la pièce de pâte 23 comme le montre la figure 4.

Puis, l'ensemble doseur-diviseur 11 remonte pendant que le piston de manoeuvre 7 recule en réaspirant de la pâte 1 dans le fond de l'entonnoir 2, l'ensemble revenant en position initiale conformément à la figure 1 pour un nouveau cycle.

La pièce de pâte 23, éjectée par le piston-doseur 13, tombe sur un tapis transporteur 24 soumis à un mouvement selon l'axe d'avancement 25 et s'enroule autour d'un tambour moteur 26 et d'un tambour mené 27. Ce tapis transporteur 24 achemine les pièces de pâte 23 de forme oblongue dont l'axe longitudinal 29 est perpendiculaire à l'axe d'avancement 25, dans une petite chambre de repos 80 permettant aux pièces de pâte 23 de se détendre après la compression subie dans la diviseuse volumétrique 3.

Cette petite chambre de repos 80 est schématisée dans les figures 1 et 2 par son contour. Le mécanisme intérieur (non représenté) est préférentiellement réalisé par un système à balancelles, sous forme de gouttières suspendues à deux chaînes latérales actionnant le transfert des pièces de pâte 23 au travers de la petite chambre de repos 80.

Avec un tel mécanisme, le tapis transporteur 24 dépose chaque pièce de pâte 23 dans une balancelle qui, après avoir parcouru la petite chambre de repos 80, bascule à la sortie de cette dernière, la pièce de pâte 23 sur un tapis transporteur 81 alimentant la façonneuse 28.

Conformément a l'invention, l'ensemble doseur-diviseur 11 confère à la pièce de pâte 23 une forme oblongue dont l'axe longitudinal 29 est perpendiculaire a l'axe d'avancement 25. Chaque extrémité 30, 31 de cette pièce de pâte 23 de forme oblongue comporte une surépaisseur 32, 33 par rapport à l'épaisseur 34 de la partie centrale 35 de la pièce de pâte 23.

Le tapis transporteur 81 déverse la pièce de pâte 23 de forme oblongue et à extrémités grossies 32, 33 dans un laminoir 36 de la façonneuse 28, de sorte que l'axe longitudinal 29 se trouve au droit de la fente 37 située entre les deux cylindres 38, 39, tournant en sens inverse l'un par rapport à l'autre, dudit laminoir 36.

Ce laminoir 36 transforme la pièce de pâte 23 de forme oblongue et à extrémités grossies 32, 33 en une galette 40 qu'il dépose sur un tapis transporteur 41 soumis à un mouvement selon l'axe d'avancement 42 situé dans le prolongement de l'axe d'avancement 25 du tapis transporteur 24 et s'enroulant autour d'un tambour moteur 43 et d'un tambour mené 44.

Conformément à l'invention, la galette 40 est une galette rectangulaire dont les côtés 45, 46, 47, 48 sont sensiblement droits et dont les grands côtés 45, 47 sont perpendiculaires à l'axe d'avancement 42 du tapis transporteur 41. Les grands côtés 45, 47 comportent une longueur 49 substantiellement plus importante que la longueur 50 de la pièce de pâte 23 avant le laminage, ce qui va dans le sens de l'obtention de pains longs.

Le tapis transporteur 41 amène la galette rectangulaire 40 en contact avec un tapis lourd 51. Dès que le grand côté avant 45 heurte le tapis lourd 51, sous l'effet de l'entraînement produit par le tapis transporteur 41, ledit grand côté avant 45 se replie légèrement sur toute sa longueur 49, puis la galette rectangulaire 40 s'enroule sur elle-même conduisant à la réalisation d'un longuet de pâte enroulée 52 parfaitement cylindrique dont la longueur 53 est pratiquement identique à la longueur 49 des grands côtés 45, 47 de la galette rectangulaire 40.

Le longuet de pâte enroulée 52 est entraîné ensuite par le tapis transporteur 41 sous une planche de façonnage 54 où se solide d'abord le grand côté arrière 47 de la galette rectangulaire 40 sur le corps du longuet de pâte enroulée 52 pour bien fermer le longuet de pâte enroulée 52 avant d'allonger définitivement la pièce de pâte a sa longueur désirée, cet allongement définitif étant fonction du réglage de la position abaissée de la planche de façonnage 54.

Les pâtons allongés 56, ainsi façonnés, sortent de la façonneuse 28 sur un convoyeur 57 qui les achemine vers le stade de fabrication suivant en vue de la réalisation du pain.

On se réfère aux figures 5 à 9 représentant le piston doseur 13. Selon l'invention, le piston doseur 13 comporte un corps 58 de forme plate dont la section transversale présente une grande largeur 59 par rapport à son épaisseur 60. Ce piston doseur 13 présente des moyens conférant aux extrémités 30, 31 de la pièce de pâte de forme oblongue 23 la surépaisseur recherchée 32, 33.

Selon un premier mode de réalisation, ces moyens sont des bossages 61, 62, 63, 64 situés aux deux chants longitudinaux 65, 66 du corps 58 de forme plate. Selon un mode d'exécution, les bossages 61, 62, 63, 64, reliés par une rampe inclinée, font saillie respectivement de la face supérieure 67 et de la face inférieure 68 du corps 58. Selon un autre mode d'exécution, les bossages 61, 62, 63, 64 font uniquement saillie soit par rapport à la face supérieure 67, soit par rapport à la face inférieure 68.

Selon un second mode de réalisation, ces moyens sont constitués de deux pistons complémentaires 69, 70 situés de part et d'autre des chants longitudinaux 65, 66 d'un piston central 71 de forme parallélépipédique. Ce dernier comporte également une grande largeur 72 par rapport à son épaisseur 73. La section des deux pistons complémentaires 69, 70 peut être carrée ou légèrement rectangulaire, l'épaisseur 74 pouvant être égale ou légèrement supérieure à l'épaisseur 73 du piston central 71.

La butée réglable 75, limitant la course de recul du piston central 71 et correspondant à la butée réglable 20 de la figure 1, est réglable indépendamment du reglage des butées 76, 77 limitant la course des pistons complémentaires 69, 70, ce qui permet d'avoir un recul 78 plus substantiel de ces derniers que le recul 79 du piston central 71.

Cette possibilité d'indépendance permet de régler l'importance des surépaisseurs 32, 33 des extrémités 30, 31 de la pièce de pâte de forme oblongue 23.

On a représenté dans les figures sous forme polygonale la section du piston doseur 13 avec ses bossages latéraux 61, 62, 63, 64 mais, bien entendu, ces derniers peuvent être raccordés au corps 58 par des courbes.

Par ailleurs, il est signalé qu'un tel piston doseur 13 à bossages latéraux 61, 62, 63, 64 ou à pistons complémentaires 69, 70, ayant été décrit ci-dessus et représenté dans les différentes figures et utilisé dans le cadre d'une diviseuse volumétrique à tiroirs et à coulisseau, peut également être adapté sur une diviseuse dont le coulisseau est remplacé par un cylindre oscillant.

De même, ce piston doseur 13 à bossages latéraux 61, 62, 63, 64 ou à pistons complémentaires 69, 70 peut être monté sur les diviseuses à piston rotatif dans lesquelles le piston doseur 13 aspire directement la pâte de l'entonnoir, ces diviseuses ne comportant pas de piston de manoeuvre amenant la pâte du fond de l'entonnoir vers le piston doseur.

## Revendications

1. Procédé de mise en forme adéquate de pièces de pâte précédant leur introduction dans un laminoir (36) d'une façonneuse (28) destinée à la fabrication de pains longs et située en aval d'un ensemble comprenant une diviseuse volumétrique (3), caractérisé par le fait que l'on confère aux pièces de pâte (23) une forme oblongue dont l'axe longitudinal (29) est perpendiculaire à l'axe d'avancement (25) et présentant à chacune de ses extrémités (30, 31) une surépaisseur (32, 33) par rapport à l'épaisseur (34) de sa partie centrale (35) et qu'ensuite on transforme ces pièces de pâte, de forme oblongue (23), en des galettes rectangulaires (40) dont les côtés (45, 46, 47, 48) sont sensiblement droits.

2. Procédé selon la revendication 1, caractérisé en ce que l'on procède à la mise en forme oblongue a' extrémités grossies (32, 33) des pièces de pâte (23) entre un entonnoir (2) d'alimentation en pâte surmontant la diviseuse volumétrique (3) et le laminoir (36) de la façonneuse (28) et que la mise en forme de galettes rectangulaires (40) est effectuée lors du passage des pièces de pâte (23) dans le laminoir (36).

3. Procédé selon la revendication 1, caractérisé en ce que l'on réalise la mise en forme oblongue à extrémités grossies (32, 33) des pièces de pâte (23) en même temps que le dosage du volume des pièces de pâte dans la diviseuse volumétrique.

4. Procédé selon la revendication 1, caractérisé en ce que l'on confère à la galette rectangulaire (40) un grand côté (45, 47) de longueur (49) substantiellement plus importante que la longueur (50) de la pièce de pâte (23) arrivant en amont de l'opération de l'arrivage.

5. Procédé selon la revendication 1 caractérisé par le fait que l'on procède au repliement du côté avant (45) de la galette rectangulaire (40) avant l'enroulement complet de cette dernière en vue de la réalisation d'un longuet de pâte enroulée (52).

6. Dispositif pour l'application du procédé selon les revendications 1 à 5 comprenant une diviseuse volumétrique (3) surmontée d'un entonnoir (2) d'alimentation en pâte et se situant en amont d'un laminoir (36) d'une façonneuse (28), caractérisé par le fait que la diviseuse volumétrique (3) comporte un piston doseur (13) présentant, d'une part, un corps (58) de forme plate dont la section transversale est de grande largeur (59, 72) par rapport à son épaisseur (60, 73) et, d'autre part, des moyens (61, 62, 63, 64, 69, 70) conférant aux extrémités (30, 31) de la forme oblongue de la pièce de pâte (23) une surépaisseur (32, 33), ce piston doseur (13) coulissant dans une chemise (15) de section correspondante.

7. Dispositif selon la revendication 6, caractérisé en ce que les moyens conférant aux extrémités (30, 31) de la forme oblongue de la pièce de pâte (23) une surépaisseur (32, 33) sont des bossages (61, 62, 63, 64) situés aux deux chants longitudinaux (65, 66) du corps (58) et reliés à ce dernier par une rampe inclinée.

8. Dispositif selon la revendication 7, caractérise en ce que les bossages (61, 62, 63, 64) sont reliés au corps (58) par des raccords.

9. Dispositif selon la revendication 7, caractérisé en ce que les bossages (61, 62, 63, 64) font saillie respectivement de la face supérieure (67) et de la face inférieure (68) du corps (58).

10. Dispositif selon les revendications 6 et 7, caractérisé en ce que le piston doseur (13) comporte des bossages (61, 62) faisant saillie par rapport à la face supérieure (67) du corps (58).

11. Dispositif selon les revendications 6 et 7, caractérisé en ce que le piston doseur (13) comporte des bossages (63, 64) faisant saillie par rapport à la face inférieure (68) du corps (58).

12. Dispositif selon la revendication 6, caractérisé en ce que les moyens conférant aux extrémités (30, 31) de la forme oblongue de la pièce de pâte (23) une surépaisseur (32, 33) sont deux pistons complémentaires (69, 70) situés de part et d'autre des chants longitudinaux (65, 66) d'un piston central (71) de forme parallélépipédique comportant une grande largeur (72) par rapport à son épaisseur (73).

13. Dispositif selon la revendication 12, caractérisé en ce que les deux pistons complémentaires (69, 70) comportent une section carrée ou légèrement rectangulaire et une épaisseur (74) égale ou légèrement supérieure à l'épaisseur (73) du piston central (71).

14. Dispositif selon les revendications 6 et 12, caractérisé en ce que les pistons (13, 69, 70, 71) comportent des courses limitées par des butées réglables (20, 75, 76, 77).

15. Dispositif selon les revendications 6, 12 et 14, caractérisé en ce que les butées (76, 77) comportent un réglage indépendant des butées (20, 75).

16. Dispositif selon la revendication 12, caractérisé en ce que les deux pistons complémentaires comportent un recul (78) plus substantiel que le recul (79) du piston central (71).

17. Dispositif selon la revendication 6, caractérisé en ce que la pièce de pâte (23) comporte un axe longitudinal (29) perpendiculaire à l'axe d'avancement (25) du tapis transporteur (24).

## Claims

1. Method of adequate forming of dough pieces prior to their introduction into a roller (36) of a shaping machine (28) intended for manufacturing long leaves and located at the downstream side of a unit comprising a volumetric dividing device (3), characterized in that the dough pieces (23) are given an elongated shape the longitudinal axis (29) of which is perpendicular to the feed axis (25) and having at each of its ends (30, 31) an extra thickness (32, 33) with respect to the thickness (34) of its middle portion (35) and that these elongatedly shaped dough pieces (23) are afterwards transformed into rectangular flat cakes (40) the sides (45, 46, 47, 48) of which are substantially straight.

2. Method according to claim 1, characterized in that the forming into an elongated shape with thickened ends (32, 33) of the dough pieces (23) is proceeded to between a dough-supply funnel (2) topping the volumetric dividing device (3) and the roller (36) of the shaping machine (28) and that the forming into rectangular cakes (40) is carried out during the passing of the dough pieces (23) through the roller (36).

3. Method according to claim 1, characterized in that the forming into an elongated shape with thickened ends (32, 33) of the dough pieces (23) is proceeded to simultaneously with the determination of the volume of the dough pieces in the volumetric dividing device.

4. Method according to claim 1, characterized in that the rectangular cake (40) is given a large side (45, 47) with a length (49) substantially larger than the length (50) of the dough piece (23) arriving at the upstream side of the arriving operation.

5. Method according to claim 1, characterized in that the folding back of the front side (45) of the rectangular cake (40) is proceeded to prior to fully rolling up this latter with a view to make a rolled-dough bread stick (52).

6. Device for the application of the method according to claims 1 through 5, comprising a volumetric dividing device (3) topped with a dough-supply funnel (2) and located at the downstream side of a roller (36) of a shaping machine (28), characterized in that the volumetric dividing device (3) includes a metering piston (13) having, on the one hand, a flat-shaped body (58) the cross-section of which is of a large width (59, 72) with respect to its thickness (60, 73) and, on the other hand, means (61, 62, 63, 64, 69, 70) giving the ends (30, 31) of the elongated shape of the dough piece (23) an extra thickness (32, 33), this metering piston (13) sliding in a sheath (15) with a corresponding cross-section.

7. Device according to claim 6, characterized in that the means giving the ends (30, 31) of the elongated shape of the dough piece (23) an extra thickness (32, 33) are bosses (61, 62, 63, 64) located on both longitudinal edges (65, 66) of the body (58) and connected to this latter through a slanted ramp.

8. Device according to claim 7, characterized in that the bosses (61, 62, 63, 64) are connected to the body (58) through adapters.

9. Device according to claim 7, characterized in that the bosses (61, 62, 63, 64) are protruding with respect to the upper face (67) and the lower face (68) of the body (58).

10. Device according to claims 6 and 7, characterized in that the metering piston (13) includes bosses (61, 62) protruding with respect to the upper face (67) of the body (58).

11. Device according to claims 6 and 7, characterized in that the metering piston (13) includes bosses (63, 64) protruding with respect to the lower face (68) of the body (58).

12. Device according to claim 6, characterized in that the means giving the ends (30, 31) of the elongated shape of the dough piece (23) an extra thickness (32, 33) are two additional pistons (69, 70) located on both sides of the longitudinal edges (65, 66) of a parallelepipedically shaped central piston (71) including a large width (72) with respect to its thickness (73).

13. Device according to claim 12, characterized in that both additional pistons (69, 70) include a square or slightly rectangular cross-section and a thickness (74) equal to or slightly larger than the thickness (73) of the central piston (71).

14. Device according to claims 6 and 12, characterized in that the pistons (13, 69, 70, 71) include strokes limited by means of adjustable thrusts (20, 75, 76, 77).

15. Device according to claims 6, 12 and 14, characterized in that the thrusts (76, 77) include an adjustment independent from the thrusts (20, 75).

16. Device according to claim 12, characterized in that both additional pistons include a more substantial room to move back (78) than the room to move back (79) of the central piston (71).

17. Device according to claim 6, characterized in that the dough piece (23) includes a longitudinal axis (29) perpendicular to the feed axis (25) of the conveyer belt (24).

## Patentansprüche

1. Verfahren zur geeigneten Formung von Teigstücken vor deren Einführung in eine Streckrolle (36) einer Formgebungsmaschine (28), die bestimmt ist für die Herstellung von langen Broten und sich an der stromabwärtsen Seite einer Einheit befindet, die eine volumetrische Teilungsvorrichtung (3) umfaßt, dadurch gekennzeichnet, daß den Teigstücken (23) eine längliche Form verleiht wird, deren Längsachse (29) senkrecht zur Vorschubachse (25) ist und an deren Enden (30, 31) eine Überdicke (32, 33) bezüglich der Dicke (34) deren Mittelteils (35) aufweist und daß diese Teigstücke länglicher Form (23) danach zu rechteckigen Flachkuchen (40), deren Seiten (45, 46, 47, 48) im wesentlichen gerade sind, umgeformt werden.

2. Verfahren nach Anspruch 1, dadurch gekennzeichnet, daß die Formung zu einer länglichen Gestalt mit verdickten Enden (32, 33) der Teigstücke (23) zwischen einem oberhalb der volumetrischen Teilungsvorrichtung (3) befindlichen Teigzufuhrtrichter (2) und der Streckrolle (36) der Formgebungsmaschine (28) vorgenommen wird und daß die Formung zu rechteckigen Flachkuchen (40) während dem Durchgang der Teigstücke (23) durch die Streckrolle (36) erfolgt.

3. Verfahren nach Anspruch 1, dadurch gekennzeichnet, daß die Formung zu einer länglichen Gestalt mit verdickten Enden (32, 33) der Teigstücke (23) gleichzeitig mit der Dosierung des Volumens der Teigstücke in der volumetrischen Teilungsvorrichtung vorgenommen wird.

4. Verfahren nach Anspruch 1, dadurch gekennzeichnet, daß dem rechteckigen Flachkuchen (40) eine große Seite (45, 47) einer Länge (49) verleiht wird, die im wesentlichen größer als die Länge (50) des an der stromaufwärtsen Seite des Ankunftvorgangs ankommenden Teigstücks (23) ist.

5. Verfahren nach Anspruch 1, dadurch gekennzeichnet, daß das Umfalten der Vorderseite (45) des rechteckigen Flachkuchens (40) vorgenommen wird, bevor dieser letzte völlig aufgerollt wird, zwecks der Herstellung einer Rollteig-Brotlänge (52).

6. Vorrichtung zur Anwendung des Verfahrens nach Ansprüchen 1 bis 5, umfassend eine volumetrische mit einem Teigzufuhrtrichter (2) gekrönte, an der stromabwärtsen Seite einer Streckrolle (36) einer Forgebungsmaschine (28) befindliche Teilungsvorrichtung (3), dadurch gekennzeichnet, daß die volumetrische Teilungsvorrichtung (3) einen Dosierkolben (13) umfaßt. der, einerseits, einen flachförmigen Körper (58), dessen Querschnitt einer größeren Breite (59, 72) ist als dessen Dicke (60, 73) und, andererseits, Mittel (61, 62, 63, 64, 69, 70), die den Enden (30, 31) der länglichen Form des Teigstückes (23) eine Überdicke (32, 33) verleihen, aufweist, wobei dieser Dosierkolben (13) in einer Hülle (15) eines entsprechenden Querschnitts gleitet.

7. Vorrichtung nach Anspruch 6, dadurch gekennzeichnet, daß die Mittel, die den Enden (30, 31) der länglichen Form des Teigstückes (23) (23) eine Überdicke (32, 33) verleihen, an den beiden Längsrändern (65, 66) des Körpers (58) befindliche und über eine geneigte Rampe mit diesem letzten verbundene Erhöhungen (61, 62, 63, 64) sind.

8. Vorrichtung nach Anspruch 7, dadurch gekennzeichnet, daß die Erhöhungen (61, 62, 63, 64) über Anschlußstücke mit dem Körper (58) verbunden sind.

9. Vorrichtung nach Anspruch 7, dadurch gekennzeichnet, daß die Erhöhungen (61, 62, 63, 64) bezüglich der Oberfläche (67) und der Unterfläche (68) des Körpers (58) herausragen.

10. Vorrichtung nach Ansprüchen 6 und 7, dadurch gekennzeichnet, daß der Dosierkolben (13) Erhöhungen (61, 62) umfaßt, die bezüglich der Oberfläche (67) des Körpers (58) herausragen.

11. Vorrichtung nach Ansprüchen 6 und 7, dadurch gekennzeichnet, daß der Dosierkolben (13) Erhöhungen (63, 64) umfaßt, die bezüglich der Unterfläche (68) des Körpers (58) herausragen.

12. Vorrichtung nach Anspruch 6, dadurch gekennzeichnet, daß die Mittel, die den Enden (30, 31) der länglichen Form des Teigstückes (23) eine Überdicke (32, 33) verleihen, zwei zusätzliche, an beiden Seiten der Längsränder (65, 66) eines quaderförmigen Zentralkolbens (71), der eine bezüglich dessen Dicke (73) große Breite (72) umfaßt, befindliche Kolben (69, 70) sind.

13. Vorrichtung nach Anspruch 12, dadurch gekennzeichnet, daß die beiden zusätzlichen Kolben (69, 70) einen viereckigen oder geringfügig rechteckigen Querschnitt und eine Dicke (74), die gleich der oder geringfügig größer als die Dicke (73) des Zentralkolbens (71) ist, umfaßt.

14. Vorrichtung nach Ansprüchen 6 und 12, dadurch gekennzeichnet, daß die Kolben (13, 69, 70, 71) Hübe umfassen, die mittels einstellbarer Anschläge (20, 75, 76, 77) begrenzt sind.

15. Vorrichtung nach Ansprüchen 6, 12 und 14, dadurch gekennzeichnet, daß die Anschläge (76, 77) eine von den Anschlägen (20, 75) unabhängige Einstellung umfassen.

16. Vorrichtung nach Anspruch 12, dadurch gekennzeichnet, daß die beiden zusätzlichen Kolben einen wesentlich größeren Rückzugraum (78) umfassen als der Rückzugraum (79) des Zentralkolbens (71).

17. Vorrichtung nach Anspruch 6, dadurch gekennzeichnet, daß das Teichstück (23) eine zur Vorschubachse (25) des Förderbandes (24) senkrechte Längsachse (29) umfaßt.
